# EUROPEAN PATENT APPLICATION

(11) **EP 1 975 755 A2**
(43) Date of publication of application: **01.10.2008**
(21) Application number: 07020818.6
(22) Date of filing: 24.10.2007
(51) Int. Cl.: G05D 1/02

(54) **Autonomous driving apparatus and executing program thereof**

(30) Priority: 28.03.2007 JP 2007083713
(71) Applicant: MATSUSHITA ELECTRIC INDUSTRIAL CO., LTD., Osaka 571-8501 (JP)
(72) Inventor: Osamu, Eguchi of c/o Matsushita Electric Industrial Co., Ltd. Intellectual Property Rights, Chuo-ku, Osaka-shi, Osaka 540-6319 (JP); Naofumi, Nakatani of c/o Matsushita Electric Industrial Co., Ltd. Intellectual Property Rights, Chuo-ku, Osaka-shi, Osaka 540-6319 (JP); Izumi, Yamaura of c/o Matsushita Electric Industrial Co., Ltd. Intellectual Property Rights, Chuo-ku, Osaka-shi, Osaka 540-6319 (JP); Kazuhiro, Kuroyama of c/o Matsushita Electric Industrial Co., Ltd. Intellectual Property Rights, Chuo-ku, Osaka-shi, Osaka 540-6319 (JP); Kazunori, Kurimoto of c/o Matsushita Electric Industrial Co., Ltd. Intellectual Property Rights, Chuo-ku, Osaka-shi, Osaka 540-6319 (JP); Masakazu, Onda of c/o Matsushita Electric Industrial Co., Ltd. Intellectual Property Rights, Chuo-ku, Osaka-shi, Osaka 540-6319 (JP)
(74) Representative: Samson & Partner

(57) **Abstract**

An autonomous driving apparatus includes: an obstacle detecting unit for detecting a presence of an obstacle or judging a distance to the obstacle; a driving unit for driving a main body; and a control unit for changing a moving direction of the main body by controlling the driving unit based on obstacle information from the obstacle detecting unit, wherein the control unit has a reciprocating mode in which the main body is reciprocatively moved within a moving area while being also moved in a direction normal to a reciprocating direction. If the control unit judges that the main body is in a movement-stuck state in which movement of the main body is stuck within a movement-stuck area by an obstacle placed in the moving area, the control unit switches the reciprocating mode to an obstacle avoiding mode in which the main body escapes from the movement-stuck area.

## Description

### Field of the Invention

The present invention relates to an autonomous driving apparatus which can detect an obstacle to thereby avoid it while driving and a program for executing a functions of units of the autonomous driving apparatus.

### Background of the Invention

Conventionally, an autonomous driving apparatus includes a control unit, a driving unit for driving a main body, a moving direction; detecting unit for detecting a moving direction of the main body, an obstacle detecting unit for detecting a presence of an obstacle or a wall, process end decision unit and succeeding process starting position decision unit. The autonomous driving apparatus, based on an output of the moving direction detecting unit, moves the main body in a first direction and when the obstacle detecting unit detects a wall or an obstacle in the front while the main body is being driven in the first direction, the main body turns to a second direction which is opposite to the first direction, and when the obstacle detecting unit detects a wall or an obstacle in the front while the main body is being driven in the second direction, the main body turns again to move in the first direction. In a process A like this, while the main body repeatedly reciprocates in the first and the second direction, the main body advances in a direction approximately normal to the first and the second direction within a certain area as aforementioned. Moreover, when the obstacle detecting unit repeatedly detects a wall or an obstacle which makes it impossible that the main body advances in a advancing direction (the direction approximately normal to the direction, and the direction of the main body advancing while reciprocating), the process end decision unit decides the end of the process A, and after that, the main body is controlled to be driven along the wall or the obstacle to a position decided by the succeeding process starting position decision unit as a succeeding process starting position (see, e.g., Japanese Patent Laid-open Application No.2003-241832).

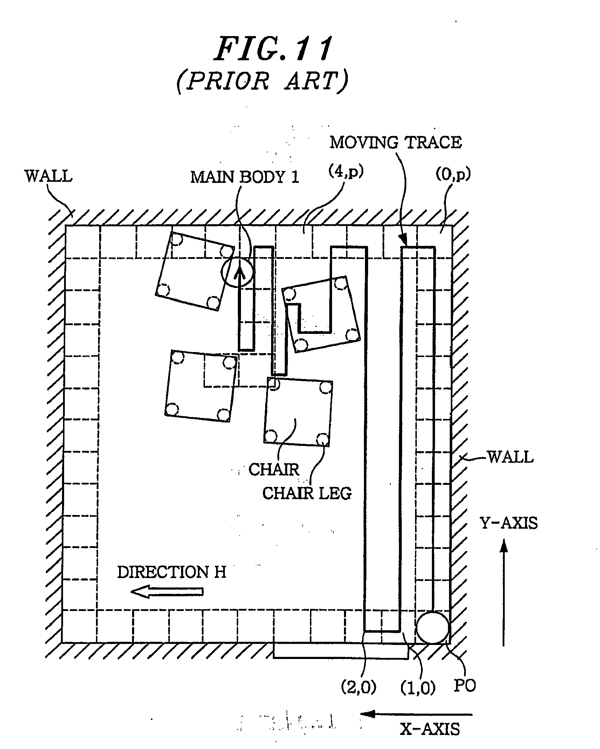

In the conventional technology, a main body rarely advances along an direction approximately normal to a reciprocating direction in a place where a plurality of tables or chairs are placed as shown in Fig. 11 (the trace therein is a schematic illustration of a moving route without considering the width of the main body), and even after repeating the reverse operation and the reciprocating operation for a while, it is difficult to get out of the place. Further, the process end decision unit decides the end of the process A in the middle of the process A, at a place, within a moving area, where the process A is required to be continued.

### Summary of the Invention

The present invention provides an autonomous driving apparatus for resolving the problem of being stuck within a specific area and repeatedly reciprocating thereat.

In accordance with a first aspect of the present invention, there is provided an autonomous driving apparatus including: an obstacle detecting unit for detecting a presence of an obstacle or judging a distance to the obstacle; a driving unit for driving a main body; and a control unit for changing a moving direction of the main body by controlling the driving unit based on obstacle information from the obstacle detecting unit, wherein the control unit has a reciprocating mode in which the main body is reciprocatively moved within a moving area while being also moved in a direction normal to a reciprocating direction; and if the control unit judges that the main body is in a movement-stuck state in which movement of the main body is stuck within a movement-stuck area by an obstacle placed in the moving area, the control unit switches the reciprocating mode to an obstacle avoiding mode in which the main body escapes from the movement-stuck area. As a result, the main body can escape from the movement-stuck area and it can prevent the main body from simply repeating the reciprocating mode without making any advance and terminating the reciprocating mode at a place where it is required to be continued.

In accordance with a second aspect of the present invention, there is provided an autonomous driving apparatus including: an obstacle detecting unit for detecting a presence of an obstacle or judging a distance to the obstacle; a driving unit for driving a main body; and a control unit for changing a moving direction of the main body by controlling the driving unit based on obstacle information from the obstacle detecting unit, wherein the control unit has a reciprocating mode in which the main body is reciprocatively moved within a moving area while being also moved in a direction normal to a reciprocating direction and wherein, in the reciprocating mode, a moving distance in the normal direction is reduced if an obstacle is detected in the moving area; and if the moving distance in the normal direction is reduced by an obstacle placed in the moving area, the control unit judges that the main body is in a movement-stuck state and switches the reciprocating mode to an obstacle avoiding mode in which the main body escapes from a movement-stuck area. As a result, the main body can escape from the movement-stuck area and it can prevent the main body from simply repeating the reciprocating mode without making any advance and terminating the reciprocating mode at a place where it is required to be continued.

In accordance with a third aspect of the present invention, there is provided an autonomous driving apparatus including: an obstacle detecting unit for detecting a presence of an obstacle or a distance to the obstacle; a direction detecting unit for recognizing a moving direction of a main body; a distance detecting unit for measuring a moving distance of the main body; a driving unit for driving the main body; a position recognizing unit for computing position coordinates of the main body from outputs of the direction detecting unit and the distance detecting unit; and a control unit for receiving respective outputs of said units and controlling the driving unit; wherein the main body is initially moved in an initial operation mode in which the main body reciprocatively moves in a moving area while changing directions and advances in a direction approximately normal to a reciprocating direction, and wherein the control unit switches the initial operation mode to an obstacle avoiding mode according to a reduced amount of advancing distance in the approximately normal direction. As a result, it can prevent the main body from simply repeating the reciprocating mode in a same area without making any advancement, and terminating the reciprocating mode at a place where it is required to be continued.

It is preferable that the position recognizing unit stores the position coordinates and an obstacle detecting frequency of the obstacle detecting unit, and wherein the control unit receives at least one of a variation of the position coordinates and the obstacle detecting frequency stored in the position recognizing unit as the reduced amount of advancing distance in the approximately normal direction and switches the initial operation mode to the obstacle avoiding mode according to a received input. As a result, it can prevent the main body from simply repeating the reciprocating mode in a same area without making any advancement and terminating the reciprocating mode at a place where it is required to be continued.

Further, the control unit may switch the initial operation mode to the obstacle avoiding mode if a variation of the position coordinates in the direction approximately normal is less than a specific amount. As a result, it can prevent the main body from simply repeating the reciprocating mode in a same area and prevent the reciprocating mode from being terminated at a place where it is required to be continued.

It is preferable that the control unit switches the initial operation mode to the obstacle avoiding mode if the obstacle detecting frequency counted while the main body moves in the approximately normal direction is greater than or equal to a threshold number. As a result, it can prevent an obstacle detecting frequency counted while the main body moves in the approximately normal direction from becoming greater and a variation of transverse-coordinate while the main body reciprocating from becoming smaller and further the reciprocating mode from being repeated in the similar area without making any advance and from being terminated at a place where it is required to be continued.

It is also preferable that the control unit switches the initial operation mode to the obstacle avoiding mode when a straight moving distance of the main body less than a predetermined fraction of a maximum straight moving distance in the moving area is repeated a predetermined number of times while the main body reciprocates, the maximum straight moving distance being stored in the position recognizing unit. As a result, it can prevent the main body from simply repeating the reciprocating mode in a same area and the reciprocating mode from being terminated at a place where it is required to be continued.

Further, the control unit, may switch the initial operation mode to the obstacle avoiding mode when a variation of the position coordinates in the direction approximately normal during a specific time period is less than a threshold. As a result, it can prevent the main body from repeating the reciprocating in a same area without making any advance and the reciprocating mode from being terminated at a place where it is required to be continued.

Further, the control unit switches the initial operation mode to the obstacle avoiding mode according to the reduced amount of advancing distance of the position coordinates in the approximately normal direction and if the obstacle detecting frequency is greater than or equal to a threshold number and when a straight moving distance of the main body less than a predetermined fraction of a maximum straight moving distance in the moving area is repeated a predetermined number of times while the main body reciprocates, the maximum straight moving distance being stored in the position recognizing unit. Consequently, it can prevent an actual advance in an direction normal to a reciprocating direction from becoming smaller than the threshold number and prevent the reciprocating mode from being repeated in a similar area and also from being terminated at a place where it is required to be continued.

It is preferable that the control unit performs a preset escaping operation after terminating the initial operation mode but before switching the initial operation mode to the obstacle avoiding mode, which is different from the initial operation mode. As a result, the main body escapes from the situation in which the reciprocating mode is repeated in a similar area without making any advance. Moreover, it can be prevented that the reciprocating mode is repeated without making any advance and is terminated at a place where it is required to be continued.

It is preferable that in the obstacle avoiding mode, a moving direction of the main body is switched to a random moving direction if an obstacle is detected while the main body moves. As a result, it can prevent the reciprocating mode from being repeated in a same area and also from being terminated at a place where it is required to be continued.

In accordance with a forth aspect of the present invention, there is provided an autonomous driving apparatus including: an obstacle detecting unit for detecting a presence of an obstacle or a distance to the obstacle; a direction detecting unit for recognizing a moving direction of a main body; a distance detecting unit for measuring a moving distance of the main body; a driving unit for driving the main body; a position recognizing unit for computing position coordinates of the main body from outputs of the direction detecting unit and the distance detecting unit for storing a variation of the position coordinates; and a control unit for receiving respective outputs of said units and controlling the driving unit; and a initial operation mode in which the main body initially performs a circling operation along a periphery of a moving area, and then performs a reciprocating operation in which the main body reciprocatively moves in a moving area while changing directions and advances in a direction approximately normal to a reciprocating direction. The control unit computes a distance of the moving area in the approximately normal direction from position coordinates obtained during the circling operation and stored in the position recognizing unit and determines the required number of turns from the computed distance and a reciprocating pitch distance of the main body, and wherein if the number of turns made in the reciprocating mode is greater than or equal to the required number of turns, and if an obstacle is detected while performing the reciprocating operation, the reciprocating mode is switched to an obstacle avoiding mode in which a moving direction of the main body is switched to a random moving direction. As a result, it can prevent the reciprocating mode from being repeated without making any advance and also from being terminated at a place where it is required to be continued.

It is preferable that mode switching is performed based on the number of turns computed by multiplying the required number of turns by a specific value. As a result, it can prevent the reciprocating mode from being repeated without making any advancement and also from being terminated at a place where it is required to be continued.

It is preferable that the autonomous driving apparatus further includes a setting input unit for setting the specific value. As a result, an operation mode of the main body is switched to another operation mode when the number of performed turns exceeds the number of turns computed by using the specific value.

It is preferable that while the main body operates in the obstacle avoiding mode which is different from the initial operation mode, the control unit compares position coordinates, stored in the position recognizing unit, of the main body obtained in an operation mode before mode switching with position coordinates of the main body in the obstacle avoiding mode and controls the main body not to go into a place where the main body has passed in the operation mode before mode switching. Therefore, the main body avoids entering into the place where it has already passed so that the main body is prevented from repeating operation without escaping therefrom. Moreover, it can prevent the the initial operation mode from being repeated without making any advancement and also from being terminated at a place where it is required to be continued.

Further, while the main body operates in the obstacle avoiding mode which is different from the initial operation mode, the control unit compares position coordinates, stored in the position recognizing mode, of the main body obtained in an operation mode before mode switching with position coordinates of the main body in the obstacle avoiding mode and controls a moving direction of the main body not to go into an area where the main body could not move in the operation mode before mode switching. As a result, it can prevent the initial operation mode from being repeated without making any advancement and also from being terminated at a place where it is required to be continued. As a result, main body is prevented from repeating operation without escaping.

In accordance with a fifth aspect of the present invention, there is provided a program for executing functions of all or at least a part of the units of the autonomous driving apparatus by a computer. Therefore, all or any unit of the autonomous driving apparatus can be effectuated through a microcomputer or the like and replacement of hardware, e.g., ultrasonic sensors, variation of characteristics due to, e.g., aging, and modification of setting conditions or parameters to realize the function can be flexibly adapted. Moreover, a way of distribution of the program can be simplified by storing the program in the storage medium or by transmitting the program through a communications channel.

### Brief Description of the Drawings

The above and other objects and features of the present invention will become apparent from the following description of embodiments given in conjunction with the accompanying drawings, in which:
Fig. 1 is a block diagram showing an autonomous driving apparatus in accordance with Embodiment 1 in the present invention;
Fig. 2 shows a detailed configuration of an obstacle detecting unit in the autonomous driving apparatus in accordance with Embodiment 1 in the present invention;
Fig. 3 is an operational flow chart of the main body of the autonomous driving apparatus to keep the autonomous driving apparatus to move in parallel direction with a wall when starting the autonomous driving apparatus in accordance with Embodiment 1 in the present invention;
Fig. 4 describes an operation of the main body of the autonomous driving apparatus in accordance with Embodiment 1 of the present invention;
Fig. 5 illustrates a moving trace of the autonomous driving apparatus in accordance with Embodiment 1 of the present invention;
Fig. 6 is an operation flow chart of the autonomous driving apparatus in accordance with Embodiment 1 of the present invention;
Fig. 7 is a block diagram showing a configuration of an autonomous driving apparatus in accordance with Embodiment 2 of the present invention;
Fig. 8 describes an operational flow chart of the autonomous driving apparatus in accordance with Embodiment 2 of the present invention;
Fig. 9 provides another operational flow chart of the autonomous driving apparatus in accordance with Embodiment 2 of the present invention;
Fig. 10 illustrates a moving trace of the autonomous driving apparatus in accordance with Embodiment 2 of the present invention; and
Fig. 11 describes an operation of a main body of a conventional autonomous driving apparatus.

### Detailed Description of the Embodiments

Hereinafter, embodiments of the present invention will be described with reference to the accompanying drawings, but the present invention is not limited to the embodiments.

### [Embodiment 1]

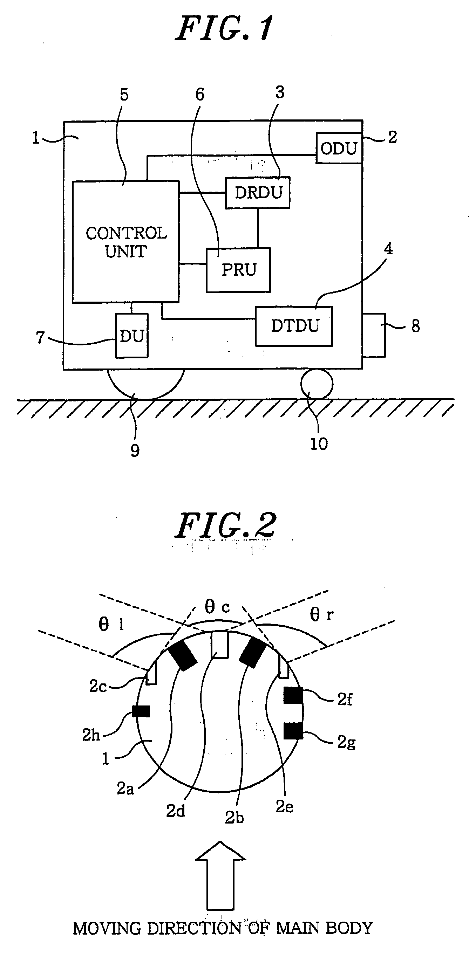

Fig. 1 shows an autonomous driving apparatus in accordance with Embodiment 1 in the present invention.

As shown in Fig. 1, an autonomous driving main body 1 has an obstacle detecting unit (ODU) 2 for detecting a presence of an obstacle and a distance to the obstacle, a direction detecting unit (DRDU) 3 having a Gyro Sensor and the like for recognizing a rotation angle of the main body 1 and a moving direction of the main body 1, a distance detecting unit (DTDU) 4 for measuring a moving distance based on a diameter of a driving wheel and the number of turns thereof, a driving unit (DU) 7 for driving the driving wheel 9 to move the main body with a trailing wheel 10, a position recognizing unit (PRU) 6 for computing a position of the main body from a direction output of the direction detecting unit 3 and a distance output of the distance detecting unit 4 and for storing a moving trace of the main body 1, a bumper 8 placed in the front of the main body 1 to detect a contact with the obstacle, and a control unit 5 for controlling the driving unit 7 based on outputs received from the obstacle detecting unit 2, the direction detecting unit 3, the distance detecting unit 4, the position recognizing unit 6, and the bumper 8.

Fig. 2 shows a detailed configuration of an obstacle detecting unit 2 in the main body 1 of an autonomous driving apparatus.

As shown in Fig. 2, transmission side ultrasonic sensors 2a and 2b for transmitting ultrasonic waves and reception side ultrasonic sensors 2c, 2d and 2e for receiving ultrasonic waves are placed in the front side of the main body 1. Further, optical distance measuring sensors 2f and 2g are placed in the right side of the main body and an optical distance measuring sensor 2h is placed in the left side of the main body wherein the optical distance measuring sensors 2f, 2g and 2h are for measuring a distance to an obstacle by using infrared rays. θ1, θc, and θr represent detecting ranges of the reception side ultrasonic sensors 2c, 2d and 2e respectively. The obstacle detecting unit 2 includes transmission side ultrasonic sensors 2a and 2b, reception side ultrasonic sensors 2c, 2d and 2e and optical distance measuring sensors 2f, 2g and 2h.

Hereinafter, operations and processes of the autonomous driving unit configured as mentioned above will be described.

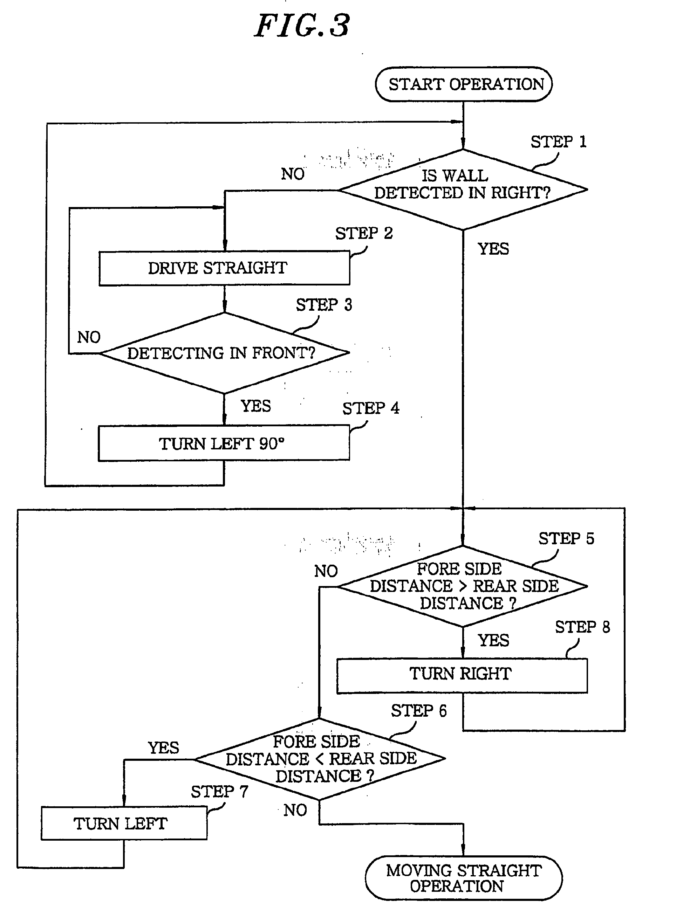

Fig. 3 shows an operation flow chart that makes the autonomous driving apparatus be maintained to be parallel to a wall before it is driven straight when starting operation.

After starting to operate, the optical distance measuring sensors 2f and 2g of the obstacle detecting unit 2 recognize whether or not there is a wall present in the right side of the main body 1 (Step 1). If there is no wall present, the autonomous driving unit in the present invention moves forward (Step 2). If an obstacle is detected within a first distance (for example, 10 cm) (Step 3), under control of the control unit 5, the driving unit 7 stops the main body and make it rotate by 90° to the left. At this time, while control unit 5 monitors a rotation angle of the main body 1 through a direction output from the direction detecting unit 3, the right and the left driving wheels are reversely rotated (the left wheel moves backward and the right wheel moves forward) by the driving unit 7 so that the main body rotates by 90° to the left (counter clockwise direction).

After that, the obstacle (the wall) which was in the front of the main body 1 is to be detected on the right side of the main body 1 and distances to the obstacle are measured by the optical measuring sensors 2f and 2g. At this time, the distance to the obstacle from the front side is compared with that from the rear side. If the distance from the front side is longer (Step 5), the main body is turned to the right to make it parallel with the wall (Step 8), and the distance to the obstacle from the front side and that from the rear side are measured again to be compared again (Step 5). If the distance from the rear side is longer (Step 6), the main body is turned to the left to be parallel with the wall (Step 7), and the distance from the front side and that from the rear side are measured again to be are compared again (Step 5). By repeating the abovementioned operations several times, the measured distances from the front side and rear side finally become to be equal and thus the main body is to be parallel to the wall on the right.

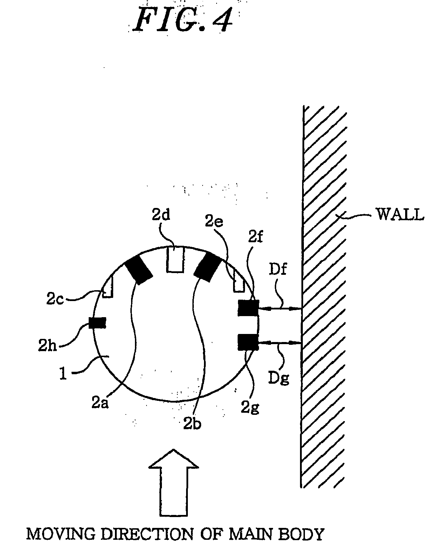

Fig. 4 shows the main body is parallel to the wall on the right. In fig. 4, distances Df and Dg which are respectively measured by the optical distance measuring sensors 2f and 2g become equal so that the main body 1 becomes parallel to the wall on the right. Moreover, once the main body becomes parallel to the wall, the control unit 5 resets the rotation angle of the main body 1 recognized by the direction detecting unit 3 and recognizes a moving direction based on a rotation angle of the main body 1 thereafter.

Further, in the embodiment shown in Fig. 4, after the main body 1 starts to operate, the obstacle detecting unit 2 detects whether or not there is a wall present on the right. If there is no wall present, the main body 1 moves forward. If there is detected an obstacle or a wall in the front of the main body, the main body turns by 90° to the left so that the obstacle of the wall detected in the front of the main body can be detected on the right of the main body 1. In this way, the main body 1 has been made to be parallel to the wall or the obstacle.

Further, optical distance measuring sensors may be added on the left side of the main body so that after the main body starts to operate, it is detected whether or not there is a wall on the left. And if there is a wall detected on the left, the main body 1 may be made to be parallel to the wall on the left. Further, it is also possible that if the optical distance measuring sensors 2f and 2g in the right side of the main body 1 detect a wall or an obstacle while the main body 1 is initially rotating by 360°, the main body 1 may be made to be parallel to the wall or the obstacle.

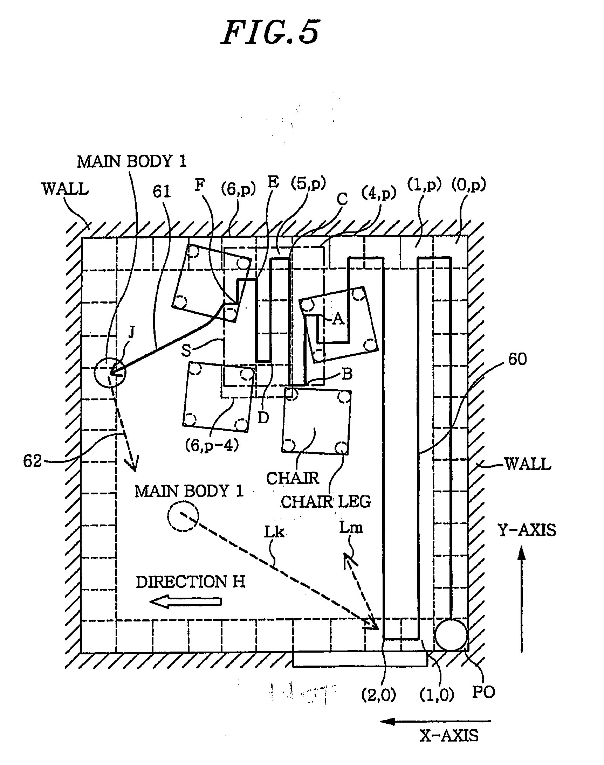

Operations after the main body 1 becomes parallel to the obstacle or the wall will be described with reference to Fig. 5. Fig. 5 describes a moving trace of the main body 1 in a moving area which the wall surrounds and a plurality of desks or chairs are placed in, wherein the moving trace is stored in the position recognizing unit 6 of the autonomous driving system of the present invention. The moving trace in Fig. 5 is a schematic illustration of a moving route without considering the width of the main body.

As shown in Fig. 5, the moving trace derived from position information of the main body 1 computed by using a rotation angle (moving direction) of the main body 1 detected by the direction detecting unit 3 in the main body 1 and a moving distance of the main body 1 detected by the distance detecting unit 4 in the main body 1 are stored in the position recognizing unit 6 in terms of two-dimensional coordinates.

The x-coordinate and y-coordinate in Fig. 5 are defined to increase as the main body 1 moving along leftward direction and upward direction, respectively. One unit of the coordinates is set to be almost same as the width of the main body 1 (for example, 30 cm). In the present embodiment, "p" is an uppermost y-coordinate in the moving area in Fig. 5 and will be used in the explanation hereafter.

In Fig. 5, when the main body 1 starts to be driven from a starting point P0 of the coordinates (0,0), the main body 1 moves straight forward while maintaining a first specified distance (10 cm, for example) from a wall on the right of the main body 1. When a wall is detected in the front of the main body 1 at the point of coordinates (0,p), the left and the right driving wheels 9 are reversely rotated so that the main body 1 makes a turn by 90° to the left as aforementioned and moves a second specified distance (about 30 cm of the width of the main body) to coordinates (1,p). Then, the main body 1 makes another turn by 90° to the left and moves straight forward in the starting point direction.

After starting to move straight forward again, when an obstacle is detected in the front within the first specified distance, at the point of coordinates (1,0), the left and the right driving wheels 9 are reversely rotated so that the main body 1 makes a turn by .90° to the right and moves forward the second specified distance to coordinates(2,0). Then, the main body 1 makes another turn by 90° to the right and moves straight forward in an opposite direction to the direction in which the main body 1 was moving before the wall of the obstacle was detected.

That is, when an obstacle is detected within the first specified distance while the main body is being driven straight, the main body makes a turn by 90° to an advancing direction (toward left in Fig. 5, i.e., direction H) of reciprocating and is moved straight the second specified distance and then makes another same right or left turn by 90° as before. Turning 180° is accomplished through the operations aforementioned and the operations are repeated whenever an obstacle is detected.

Hereinafter, the operations aforementioned will be defined as a first operation mode 60. The first operation mode 60 includes a direction change T1 representing the first turning by 90° after the obstacle is detected, a transverse straight drive T2 representing driving in the transverse direction and a direction change T3 representing the successive turning by 90° thereafter.

Based on a rotation angle (moving direction) of the main body 1 detected by the direction detecting unit 3 in the main body 1 and a moving distance of the main body 1 recognized by the distance detecting unit 4 in the main body 1, a position of the main body 1 is computed and stored to form the moving trace of the main body in the position recognizing unit 6. Further, if an obstacle is detected by the obstacle detecting unit 2 or by the bumper 8 in the middle of the transverse straight drive T2, the control unit 5 stops the transverse straight drive T2 to perform the direction change T3 thereat.

Therefore, as shown in Fig. 5, in a place where a multiplicity of chairs and the like are arranged, the main body 1 hardly advances by as much as the width of the main body in transverse direction since the obstacle detecting unit 2 or the bumper 8 detects chair legs and the like while the main body 1 is in the transverse straight drive T2 so that the direction change T3 is performed thereat. As a result, there is formed a moving trace such as the one shown in a trace block S indicated by a dash dot line in Fig. 5 (actually, only the trace on the two-dimensional plane coordinates is recorded in the position recognizing unit 6 and positions of chairs shown in Fig. 5 are not recorded, which is shown just for the convenience for the explanation of operations).

As shown in the trace block S in Fig. 5, in the region from coordinates (4, p) to coordinates (6, p-4), while the main body 1 is in a reverse operation (direction change T1, transverse straight drive T2, and direction change T3) after detecting an obstacle, another obstacle can also be detected. As a result, the main body cannot advance by as much as the second specified distance in the transverse direction even after making the turn and has to repeat the process of driving straight forward and a small distance of advancing in the transverse direction.

In the trace block S in Fig. 5, another obstacle are detected during the transverse straight drive T2 of the reverse operation successively at the points A, B, C, D, E and F.

Normally, if the reverse operation is performed six times, coordinates of the main body in a advancing direction H are increased by as many as the number of the reverse operation. Actually in the trace block S, however, there are only two units of increase in x-coordinate along the advancing direction H. Further, before the main body enters to the trace block S, γ-coordinate used to be changed from "0" to "p", or "p" to "0" along the advance direction H. On the other hand, while the main body moves within the trace block S, the coordinates change by smaller amount and the main body reciprocates between p and p-4. Therefore, in the trace block S, even if the main body 1 makes a turn at every point where an obstacle is detected, the main body 1 cannot advance by the specified second distance in the transverse direction and advance by only short distance toward the vertical direction. As a result, the main body 1 reciprocates in the area within coordinates (4, p) to coordinates(6, p-4).

From the moving trace of the main body stored in the position recognizing unit 6, the control unit 5 judges that the main body reciprocates in the area in which the coordinates change very little in the trace block S and performs an escaping operation 61 for a specific time (for example two seconds) to help the main body to escape therefrom.

For example, the escaping operation 61 is performed such that under the control unit 5, the main body 1 is made to turn right or left so that the optical distance measuring sensors 2f and 2g, or 2h detect the obstacle which was detected by the obstacle detecting unit 2 in the front of the main body 1, and further is made to move while maintaining a third specified distance (for example 5 cm) from the obstacle detected by the optical distance measuring sensors 2f and 2g, or 2h.

Further, after performing the escaping operation 61 for a specific time, the control unit 5 moves the main body 1 straight if the obstacle detecting unit 2 does not detect any obstacle in the front of the main body 1. After an obstacle is first detected, the control unit 5 performs a second operating mode 62 which is different from the first operating mode 60 where the main body 1 turns and reciprocates so far whenever an obstacle is detected. If an empty space is not detected in the front for a specified time, the main body 1 continues to move along the obstacle until an empty space is detected.

The second operation mode 62 is a random operation mode in which a moving direction of the main body 1 is switched to a random moving direction if an obstacle is detected.

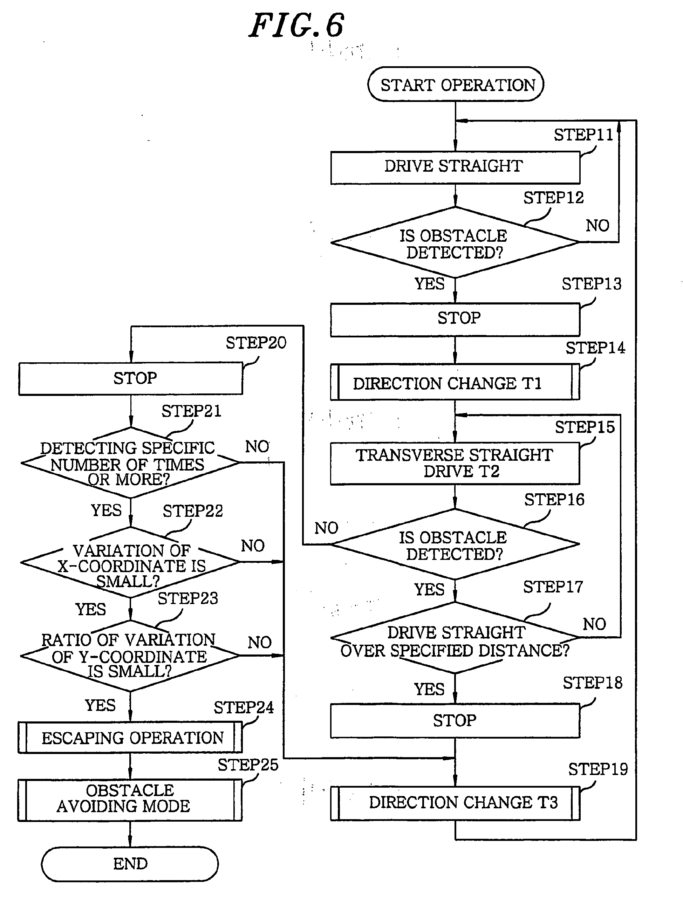

The operation through which the main body 1 switches to the second operation mode 62 will be described with reference to Fig. 6.

As aforementioned, Fig. 6 shows an operation flow chart in which the operation mode of the main body 1 is switched to the second operation mode 62. The control unit 5 first makes the main body 1 parallel to the wall, and then, moves the main body straight thereafter (Step 11 in Fig. 6). If an obstacle is detected within a first specified distance (for example, 10 cm) in the front of the main body 1 (Step 12), the control unit 5 first stops the main body 1 (Step 13) and performs direction change T1 (turning 90° to the advancing directiong) (Step 14).

After then, the transverse straight drive T2 is initiated (Step 15), and the main body 1 is move straight over a second specified distance (about 30 cm of the width of the main body) (Step 17) while checking whether an obstacle is detected within the first specified distance in the front (Step 16).

In case that an obstacle is detected during the transverse straight drive T2 at Step 16, the control unit 5 first stops the main body 1 (Step 20), and examines whether obstacles are successively detected a specific number of times (for example, six times) or more at Step 16 while the main body is being driven straight for reverse direction at Step 17 (Step 21).

If obstacles have been detected successively, the control unit 5 examines whether or not a variation of the transverse-coordinate (x-coordinate) during the reciprocating operation in which the obstacles have been successively detected is more than a threshold (for example, three units) (Step 22).

If the variation of the transverse-coordinate is less than the threshold, the control unit 5 examines whether a variation of a longitudinal-coordinate (y-coordinate) during reciprocatively moving in which the obstacles have been successively detected is less or more than a specific fraction of maximum straight moving distance in the moving area (as many as units of "p") (in the embodiment, specific fraction is equivalent to five units) (Step 23).

If the variation of the longitudinal-coordinate is less, the control unit 5 judges that the main body 1 simply repeats reciprocating at a same part of the same area without making any advance during the reciprocating operation. Therefore, the escaping operation 61 (operation of driving along an obstacle) aforementioned is performed so that the main body 1 can escape therefrom. The escaping operation 61 is performed for a specific period (for example, two seconds) or until an empty space is detected, and thereafter, the main body is driven straight forward until an obstacle is detected for the first time (Step 24). After then, the second operation mode 62 of the random operation aforementioned is performed (Step 25).

Meanwhile, if the conditions at Step 21, Step 22 and Step 23 are not satisfied, the direction change T3 at Step 19 is performed and the main body continues to reciprocate.

As shown by the moving trace in Fig. 5, after the direction change T1 is completed, the main body 1 detects an obstacle while transverse straight drive T2 is performed so that the main body cannot move to the transverse direction over the second specified distance (for example, 30 cm) and instead, makes direction change T3 to left by 90° at a point where the main body 1 cannot move further in the transverse direction. Similar conditions are successively faced at points B, C, D, E, and F such that the main body 1 has to makes direction change T3 to left by 90° during the transverse straight drive T2 before completing the transverse straight drive T2 over the second specified distance at a point from which the main body 1 cannot further proceed in the transverse direction, thereby resulting in six successive direction change T3. Moreover, a variation of the transverse-coordinate is three units or less and a specific fraction of a maximum moving distance of the longitudinal-coordinate is five units or less. Therefore, the control unit 5 judges that the main body 1 simply repeats reciprocating at a same portion of the area without making any advancement, and helps the main body 1 to escape therefrom by performing the escaping operation 61 in which the main body 1 moves along detected obstacle for a specific period. After then, when there is no obstacle detected in the front, the control unit 5 has the main body 1 to move straight. After an obstacle is detected in the front at a point J, the control unit 5 switches the operation mode to the second operation mode 62 that changes the moving direction of the main body 1 along a direction randomly chosen.

The control unit 5 stores, in the position recognizing unit 6, coordinates from (4, p) to (6, p-4) corresponding to the trace block S where the main body 1 has difficulties in the reciprocating operation during the first operation mode 60. Further, the control unit 5 monitors positions of the driving main body 1 in the coordinates plane recognized by the position recognizing unit 6 during the second operation mode 61. When the main body 1 enters into the trace block S while being driven, the control unit 5 first stops the main body and makes it turn to a random moving direction other than the one heading toward the trace block S it has already traced.

Further, when a direction to follow next is randomly chosen since an obstacle is detected while the main body 1 operates in the second operation mode, any direction heading toward the place where the main body has already passed is excluded based on the trace stored in the position recognizing unit 6. For example, as Lk represented as a dot line in Fig. 5, if an obstacle is detected in the front at coordinates (2,0) while the main body 1 is moving, the main body 1 avoids switching its direction to the right, i.e., heading to the place where it has already passed. Instead, the main body 1 switches its direction to a random moving direction among other directions, e.g., direction Lm represented as a dashed dot line.

As aforementioned, in the present embodiment, if the control unit 5 judges, based on a variation of position coordinates and an obstacle detecting frequency, which are stored in the position recognizing unit 6, of the main body 1 that the main body simply repeats reciprocating at the same place, a driving mode of the main body is switched from the first operation mode 60 in which the main body reciprocates in the moving area while changing directions, to the second operation mode 62 having different operation, via the escaping operation 61 against an obstacle. As a result, it can be prevented that the reciprocating mode is simply repeated without any advancement and is terminated at a place where the reciprocating mode needs to be continued.

In Embodiment 1, if the control unit 5 judges, based on variations of the transverse-coordinate and the longitudinal-coordinate and an obstacle detecting frequency, which are stored in the position recognizing unit 6, of the main body 1 that the main body simply repeats the reciprocating operation at the same place, the operation mode of the main body is switched from the first operation mode 60 to the second operation mode 62. However, operations are not limited thereto. It is also possible to achieve the same effects as in Embodiment 1 by first starting to monitor whether or not the main body 1 detects an obstacle in the transverse direction from the time when it is recognized based on the moving trace that a straight moving distance in the reciprocating direction is smaller than a moving distance in the transverse straight drive T2 up to the point, and then by switching the operation mode to the second operation mode 62 if an obstacle detecting frequency at the side of the main body 1 is greater than a threshold.

Further, it is also possible to achieve the same effects as in Embodiment 1 in a manner that while the main body is reciprocatively moved, the control unit 5 monitors a variation of the transverse-coordinate during a specific time periods and if the variation of the transverse-coordinate is less than a pre-determined threshold (for example, five units), the operation is switched to the second operation mode 62.

Further, the same effects as in Embodiment 1 can be attained as follows. While the main body 1 operates in the second operation mode 62, the control unit 5 compares position coordinates, stored in the position recognizing unit 6, of the main body 1 obtained in a first operation mode 60 before mode switching to the second operation mode 62 with present position coordinates which are being recognized by the position recognizing unit 6. When the main body 1 goes into a place where having passed in the first operation mode 60 during the reciprocating operation, the control unit 5 once stops the main body 1 and controls the main body 1 to avoid changing a moving direction of the main body to an area a place where having passed in the first operation mode 60 and switches the moving direction to a random moving direction.

In Embodiment 1, if the control unit 5 judges, based on three conditions such as an obstacle detecting frequency counted while the main body moves in the approximately normal direction, reduction (less than a specific amount) of the variation of the transverse-coordinate while the main body reciprocating, and reduction (less than a specific amount) of the variation of the vertical-coordinate while the main body reciprocating that the main body simply repeats reciprocating at the same place, and then the operation mode of the main body 1 is switched from the first operation mode 60 to the second operation mode 62. However, the same effects as in Embodiment 1 can be attained through switching operations mode to the second operation mode 62 if only one of the three conditions is satisfied.

### [Embodiment 2]

Hereinafter, Embodiment 2 of the present invention will be described. Only the configuration and operation different from Embodiment 1 will be described; and similar parts will be represented by similar reference characters and the configuration and operation thereof will be omitted.

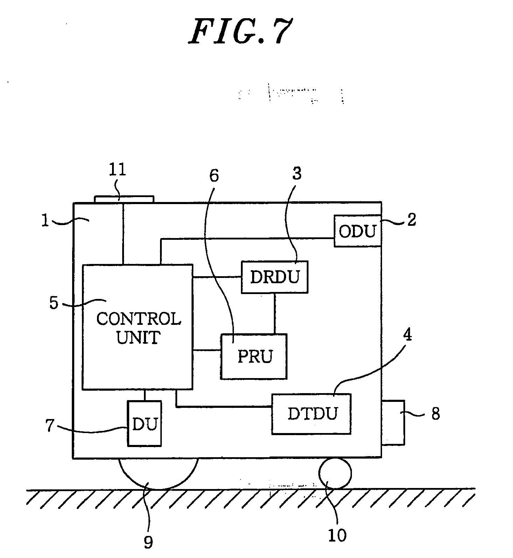

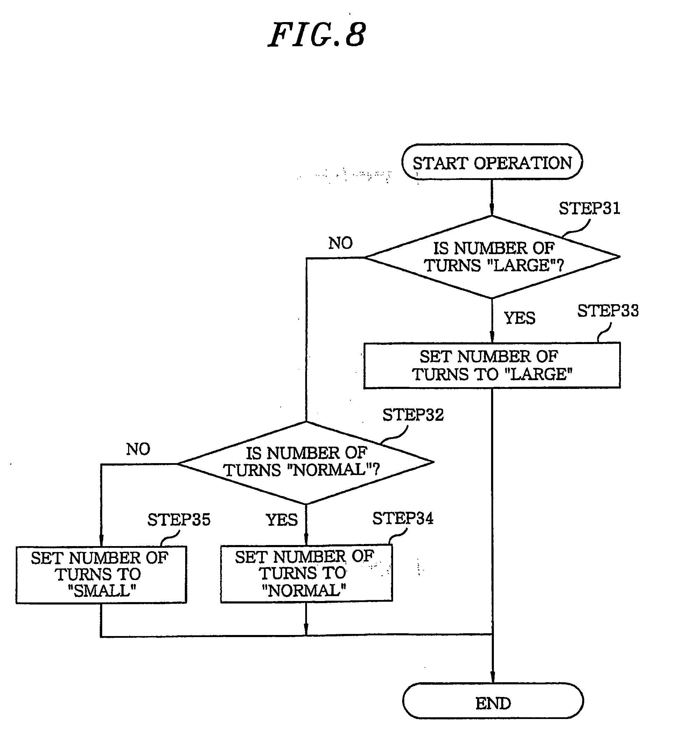

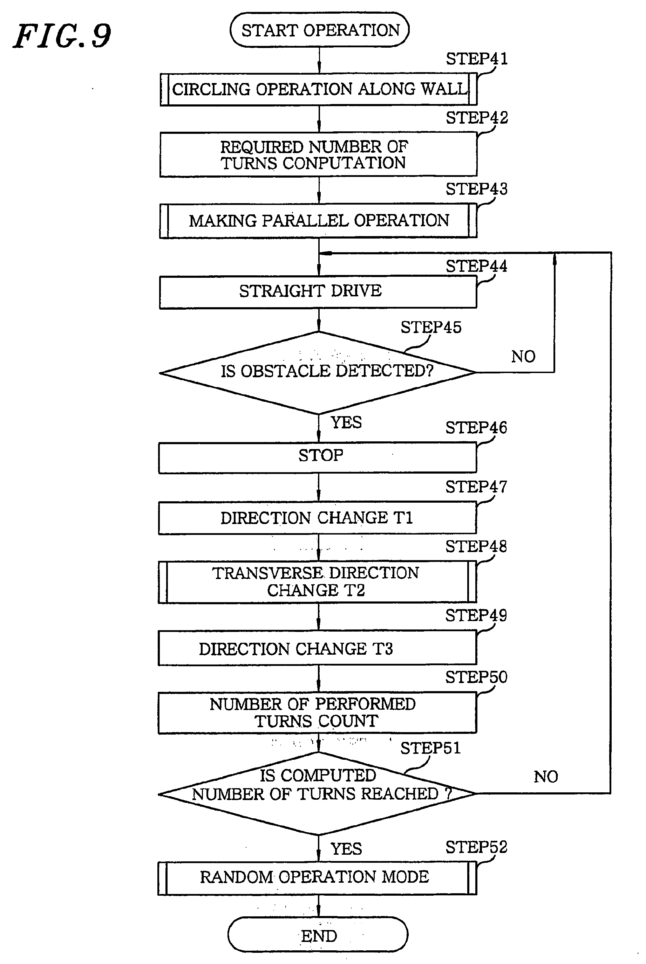

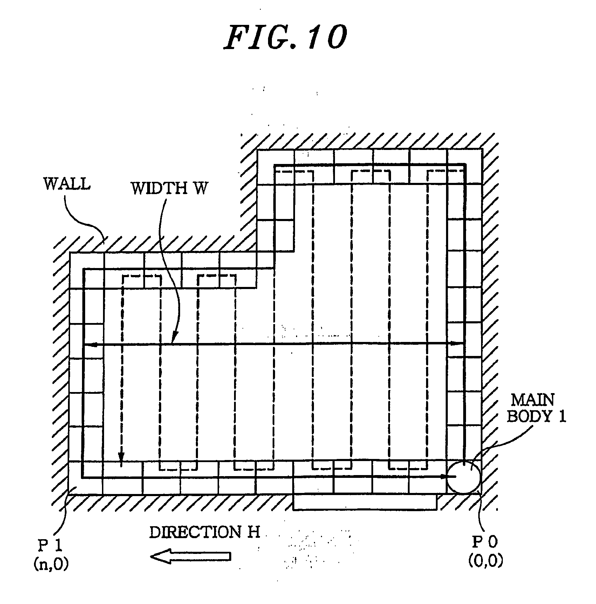

Fig. 7 is a block diagram of an autonomous driving apparatus in Embodiment 2 of the present invention. Figs. 8 and 9 show an operation flow chart of the autonomous driving apparatus. Fig. 10 describes an operation of the autonomous driving apparatus.

The elements in Fig. 7 are equivalent to those in Embodiment 1 except adding a setting input unit 11 for setting a specific value which is needed to decide a number of turns from a straight distance of a room in one of directions thereof described later.

The setting input unit 11 is for receiving input for setting a number of reverse direction (a number of turns) while the main body 1 reciprocates, the input being classified into three categories such as "large", "normal", or "small".

The straight distance of the room is measured in an advancing direction while the main body 1 reciprocates and whether the direction is transverse or longitudinal is decided depending on the reciprocating direction of the main body 1.

As shown in Fig. 10, in the event of the main body 1 initiating the reciprocating operation heading upward in Fig. 10 at P0, an advancing direction of the reciprocating operation is a transverse direction of the room in Fig. 10 so that the one of directions of the room is the transverse direction H in Fig. 10.

Hereinafter, operations and processes of an autonomous driving apparatus configured as aforementioned will be described.

In the autonomous driving apparatus in accordance with Embodiment 2, the control unit 5 confirms the contents set by the setting input unit 11 and stores a constant for determining a number of turns corresponding to the value set by the setting input unit 11.

As shown in Fig. 8, the control unit 5 of the autonomous driving apparatus in the present invention initially decides a determining constant according to the number of turns such as "large", "normal" and "small", set by the setting input unit 11 '(Steps 31 and 32).

If the number of turns set by the setting input unit 11 is "large", the control unit 5 sets a determining constant to, e.g., 1.2 to make the number of turns larger than that in case of "normal", as shown in Fig. 8 and stores thereof (Step 33).

As a result, the number of turns set by the control unit 5 is to be a result of multiplying the number of times computed from a distance of the moving area in the transverse direction obtained during the circling operation by 1.2.

If the number of turns set by the setting input unit 11 is "large", the control unit 5 sets a determining constant to, e.g., 1, and stores thereof (Step 34).

As a result, the number of turns set by the control unit 5 is to be a result of multiplying the number of times computed from a distance of the moving area in the transverse direction obtained during the circling operation by 1.

If the number of turns set by the setting input unit 11 is "large", the control unit 5 sets a determining constant to, e.g., 0.8, and stores thereof (Step 35).

As a result, the number of turns set by the control unit 5 is to be a result of multiplying the number of times computed from a distance of the moving area in the transverse direction obtained during the circling operation by 0.8.

In this way, the control unit 5 checks input of the setting input unit 11 and stores a determining constant of a number of turns corresponding to the input of the setting input unit 11.

Then, as same as in Embodiment 1, the main body 1 moves to be parallel to a wall on the right, and then advances while maintaining a first specified distance (10 cm) from the wall. If the obstacle detecting unit 2 detects an obstacle in the front, the main body 1 makes a turn by 90° to the left thereat so that the obstacle which was detected in the front can be detected on the right. The main body 1 is driven toward the left while maintaining the first specified distance (10 cm) to the obstacle detected in the front. With respect to any obstacle successively detected in the front, the switching of the direction is repeated as aforementioned so that the main body performs circling operation along a periphery of a moving area through turning left, as represented in a solid line in Fig. 10 (Step 41 in Fig. 9).

When the main body 1, according to the recognition by the position recognizing unit 6, returns to a start point (origin (0, 0) in Fig. 10) and turns left so that the main body 1 maintains the first specified distance from the wall on the right of the room of Fig, 10, completion of the circle operation is judged.

Through the width W as shown in Fig.10, i.e., the transverse distance of the room which is computed by using the moving trace stored in the position recognizing unit 6, the second specified distance (30 cm) of the main body 1, and a determining constant of a number of 180° reverse turns stored in the control unit 5 through setting by the setting input unit 11, a number of turns within the room is computed as follows (Step 42);
the number of 180° reverse turns = width W/ the second specified distance * a determining constant stored in the control unit 5.

The main body 1 is made to move in parallel to the wall on the right (Step 43). After the main body 1 is made to move in parallel with the wall, the control unit 5 resets a rotation angle of the main body 1 recognized by the direction detecting unit 3. Then, the control unit 5 drives the main body 1 (Step 44) and the first operation mode 60 is performed as in Embodiment 1.

As for the steps of the operation, the main body 1 moves straight until an obstacle is detected in the front within the first distance (10 cm). If an obstacle is detected (Step 45), the main body 1 first stops (Step 46) and turns by 90° to the left (Step 47). After then, the main body 1 travels straight the second distance (30 cm) to move in the transverse direction of the reciprocating direction (Step 48) and then turns by 90° to the left (Step 49).

Further, as in Embodiment 1, if an obstacle is detected while the main body 1 moves in the transverse direction (transverse straight drive T2) over the second distance (30 cm) at Step 48, the main body 1 stops thereat and turns (direction change T3) as Step 49.

A number of times of turning operation through Steps 47 to 49 (the number of performed turns) is counted (Step 50) and compared with the number of turns computed in step 42 (Step 51). If the number of performed turns is less than the number of turns, the procedure is returned to Step 44 so that the main body 1 starts to move straight.

If the number of performed turns is larger than the number of turns computed in Step 42, the operation mode is switched to the second operation mode 62 which is a random operation in which a moving direction of the main body is switched to a random moving direction if an obstacle is detected while the main body moves (Step 52).

As previously mentioned, if the number of turns during the reciprocating operation is greater than or equal to the required number of turns which is determined through the circling operation with turning left due to obstacles and the like, the operation mode is switched to the second operation mode in which a moving direction of the main body is switched to the random moving direction when an obstacle is detected. As a result, the main body 1 can be prevented from repeating the reciprocating operation without advancing to thereby terminating the reciprocating operation at a place where it is required to be continued.

Further, a number of turns can be adjusted step by step (three steps of "large", "normal", "small") depending on the difficulty in the main body 1 advancing while reciprocating. As a result, the disturbance in the reciprocating operation can be prevented through a proper driving condition.

Further, a circling operation in Embodiment 2 is described as initially performing thereof along the periphery of the room by turning left, but the present invention is not limited thereto. It is also possible that an optical distance measuring sensor is additionally placed at the left side of the main body 1, and the circling operation may be performed through circling along the periphery of the room by turning right round a wall on the left.

### [Embodiment 3]

Hereinafter, an autonomous driving apparatus in Embodiment 3 of the present invention will be described.

In Embodiment 3, functions of every unit in Embodiments 1 and 2 are achieved in a form of a program cooperating hardware resources of, e.g., such as electronics/information equipment, computer, or server, which includes CPU (or microcomputer), RAM, ROM, storage medium/recorder, I/O, and the like.

In case of a form of a program, storing in a storage medium such as a magnetic medium or an optical medium, or transmitting by using a communications channel such as the Internet is possible so that distribution and update of a new function or installing thereof can be simplified.

The control unit 5 may be implemented by have a microcomputer or the like, which includes a storage medium which stores the program and operations and functions of all or at least part of the units 2 to 7 can be controlled and achived by the program.

As the above-mentioned, an autonomous driving apparatus and a program making units of the autonomous driving apparatus function in the present invention prevents the main body from simply repeating the reciprocating operation without making any advancement and having the reciprocating operation to be terminated at a place where it is required to be continued by switching the operation mode of the main body from the reciprocating mode with direction change within moving area to the other operation mode in accordance with the judgment based on a variation of position coordinates and an obstacle detecting frequency, which are stored in the position recognizing unit, of the main body. Therefore, the present invention can be applied to an automated cleaner and a monitoring robot, and other robots.

While the invention has been shown and described with respect to the embodiments, it will be understood by those skilled in the art that various changes and modifications may be made without departing from the scope of the invention as defined in the following claims.

## Claims

1. An autonomous driving apparatus comprising:
an obstacle detecting unit for detecting a presence of an obstacle or judging a distance to the obstacle;
a driving unit for driving a main body; and
a control unit for changing a moving direction of the main body by controlling the driving unit based on obstacle information from the obstacle detecting unit,
wherein the control unit has a reciprocating mode in which the main body is reciprocatively moved within a moving area while being also moved in a direction normal to a reciprocating direction; and if the control unit judges that the main body is in a movement-stuck state in which movement of the main body is stuck within a movement-stuck area by an obstacle placed in the moving area, the control unit switches the reciprocating mode to an obstacle avoiding mode in which the main body escapes from the movement-stuck area.

2. An autonomous driving apparatus comprising:
an obstacle detecting unit for detecting a presence of an obstacle or judging a distance to the obstacle;
a driving unit for driving a main body; and
a control unit for changing a moving direction of the main body by controlling the driving unit based on obstacle information from the obstacle detecting unit,
wherein the control unit has a reciprocating mode in which the main body is reciprocatively moved within a moving area while being also moved in a direction normal to a reciprocating direction and wherein, in the reciprocating mode, a moving distance in the normal direction is reduced if an obstacle is detected in the moving area; and if the moving distance in the normal direction is reduced by an obstacle placed in the moving area, the control unit judges that the main body is in a movement-stuck state and switches the reciprocating mode to an obstacle avoiding mode in which the main body escapes from A movement-stuck area.

3. An autonomous driving apparatus comprising:
an obstacle detecting unit for detecting a presence of an obstacle or a distance to the obstacle;
a direction detecting unit for recognizing a moving direction of a main body;
a distance detecting unit for measuring a moving distance of the main body;
a driving unit for driving the main body;
a position recognizing unit for computing position coordinates of the main body from outputs of the direction detecting unit and the distance detecting unit; and
a control unit for receiving respective outputs of said units and controlling the driving unit;
wherein the main body is initially moved in an initial operation mode in which the main body reciprocatively moves in a moving area while changing directions and advances in a direction approximately normal to a reciprocating direction, and wherein the control unit switches the initial operation mode to an obstacle avoiding mode according to a reduced amount of advancing distance in the approximately normal direction.

4. The autonomous driving apparatus of claim 3, wherein the position recognizing unit stores the position coordinates and an obstacle detecting frequency of the obstacle detecting unit, and wherein the control unit receives at least one of a variation of the position coordinates and the obstacle detecting frequency stored in the position recognizing unit as the reduced amount of advancing distance in the approximately normal direction and switches the initial operation mode to the obstacle avoiding mode according to a received input.

5. The autonomous driving apparatus of claim 3 or 4, wherein the control unit switches the initial operation mode to the obstacle avoiding mode if a variation of the position coordinates in the direction approximately normal is less than a specific amount.

6. The autonomous driving apparatus in claim 4, wherein the control unit switches the initial operation mode to the obstacle avoiding mode if the obstacle detecting frequency counted while the main body moves in the approximately normal direction is greater than or equal to a threshold number.

7. The autonomous driving apparatus of claim 3 or 4, wherein the control unit switches the initial operation mode to the obstacle avoiding mode when a straight moving distance of the main body less than a predetermined fraction of a maximum straight moving distance in the moving area is repeated a predetermined number of times while the main body reciprocates, the maximum straight moving distance being stored in the position recognizing unit.

8. The autonomous driving apparatus of claim 3 or 4, wherein the control unit switches the initial operation mode to the obstacle avoiding mode when a variation of the position coordinates in the direction approximately normal during a specific time period is less than a threshold.

9. The autonomous driving apparatus of claim 4, wherein the control unit switches the initial operation mode to the obstacle avoiding mode according to the reduced amount of advancing distance of the position coordinates in the direction approximately normal and if the obstacle detecting frequency is greater than or equal to a threshold number and when a straight moving distance of the main body less than a predetermined fraction of a maximum straight moving distance in the moving area is repeated a predetermined number of times while the main body reciprocates, the maximum straight moving distance being stored in the position recognizing unit.

10. The autonomous driving apparatus of claim 3, wherein the control unit performs a preset escaping operation after terminating the initial operation mode but before switching the initial operation mode to the obstacle avoiding mode, which is different from the initial operation mode.

11. The autonomous driving apparatus of any one of claims 1 to 10, wherein in the obstacle avoiding mode, a moving direction of the main body is switched to a random moving direction if an obstacle is detected while the main body moves.

12. An autonomous driving apparatus comprising:
an obstacle detecting unit for detecting a presence of an obstacle or a distance to the obstacle;
a direction detecting unit for recognizing a moving direction of a main body;
a distance detecting unit for measuring a moving distance of the main body;
a driving unit for driving the main body;
a position recognizing unit for computing position coordinates of the main body from outputs of the direction detecting unit and the distance detecting unit for storing a variation of the position coordinates; and
a control unit for receiving respective outputs of said units and controlling the driving unit; and
an initial operation mode in which the main body initially performs a circling operation along a periphery of a moving area, and then performs a reciprocating operation in which the main body reciprocatively moves in a moving area while changing directions and advances in a direction approximately normal to a reciprocating direction,
wherein the control unit computes a distance of the moving area in the approximately normal direction from position coordinates obtained during the circling operation and stored in the position recognizing unit and determines the required number of turns from the computed distance and a reciprocating pitch distance of the main body, and
wherein if the number of turns made in the reciprocating mode is greater than or equal to the required number of turns, and if an obstacle is detected while performing the reciprocating operation, the reciprocating operation is switched to an obstacle avoiding mode in which a moving direction of the main body is switched to a random moving direction.

13. The autonomous driving apparatus of claim 12, wherein mode switching is performed based on the number of turns computed by multiplying the required number of turns by a specific value.

14. The autonomous driving apparatus of claim 13, further comprising a setting input unit for setting the specific value.

15. The autonomous driving apparatus of any one of claims 3 to 11, wherein while the main body operates in the obstacle avoiding mode which is different from the initial operation mode, the control unit compares position coordinates, stored in the position recognizing unit, of the main body obtained in an operation mode before mode switching with position coordinates of the main body in the obstacle avoiding mode and controls the main body not to go into a place where the main body has passed in the operation mode before mode switching.

16. The autonomous driving apparatus of any one of claims 3 to 15, wherein while the main body operates in the obstacle avoiding mode which is different from the initial operation mode, the control unit compares position coordinates, stored in the position recognizing mode, of the main body obtained in an operation mode before mode switching with position coordinates of the main body in the obstacle avoiding mode and controls a moving direction of the main body not to go into an area where the main body could not move in the operation mode before mode switching.

17. A program for executing functions of all or at least a part of the units of the autonomous driving apparatus of any one of claims 1 to 16 by a computer.
